# EUROPÄISCHE PATENTSCHRIFT

(11) **EP 1 763 662 B1**
(45) Veröffentlichungstag und Bekanntmachung des Hinweises auf die Patenterteilung: **24.08.2011**
(21) Anmeldenummer: 05752345.8
(22) Anmeldetag: 09.06.2005
(51) Int. Cl.: G01M 17/007

(54) **Vorrichtung zur Simulation einer Seitenkollision eines Kraftfahrzeuges**
Device for simulating a side impact of a vehicle
Dispositif de simulation d'une collision latérale d'un véhicule

(30) Priorität: 09.06.2004 AT 40604 U
(43) Veröffentlichungstag der Anmeldung: 21.03.2007
(73) Patentinhaber: Magna Steyr Fahrzeugtechnik AG & Co KG, 8041 Graz (AT)
(72) Erfinder: RIESER, Andreas, A-8740 Zeltweg (AT); EICHBERGER, Arno, A-8061 St. Radegund (AT); STEFFAN, Hermann, A-7010 Graz (AT)
(74) Vertreter: Schupp, Bernhard
(86) Internationale Anmeldenummer: PCT/AT2005/000208
(87) Internationale Veröffentlichungsnummer: WO 2005/121742

(56) Entgegenhaltungen:
- WO-A-97/46859
- WO-A-99/30125
- DE-A- 10 113 501
- DE-A- 19 854 856

## Beschreibung

Die Erfindung betrifft eine Vorrichtung zur Simulation einer Kollision eines Kraftfahrzeuges mit einem seitlich auftreffenden Impaktor, bestehend aus: einem in Fahrzeugquerrichtung verschiebbaren Sitzschlitten, auf dem eine Sitzeinheit mit einer anthropomorphen Versuchspuppe (einem sogenannten "Dummy") und gegebenenfalls diversen anderen Teilen (zum Beispiel Sicherheitseinrichtungen) befestigt ist, aus einem in Fahrzeugquerrichtung verschiebbaren Seitenteilschlitten, auf dem ein Seitenteil des Kraftfahrzeugaufbaues, gegebenenfalls diversen anderen Teilen befestigt ist, und aus einem für die Einwirkung auf das Seitenteil bestimmten Impaktor, der eine Beschleunigungseinrichtung umfasst, wobei der Sitzschlitten und der Seitenteilschlitten voneinander unabhängig verschiebbar sind.

Bei Kollisionen, bei denen ein Kraftfahrzeug mit einer seiner Seiten mit einem flächigen Hindernis (auch Barriere genannt, zum Beispiel der Vorderwagen eines anderen Fahrzeuges) kollidiert, drückt das Hindernis einen Teil der Kraftfahrzeugseite (eine Tür oder eine Seitenwand) in den Innenraum des Fahrzeuges, wo dieser in der Folge auf die Sitzeinheit stoßt. Die Fahrzeuginsassen können so nicht nur durch die Beschleunigungs- beziehungsweise Trägheitskräfte, sondern auch durch Kollision mit den eingedrückten Kraftfahrzeugseitenteilen verletzt werden. Daher werden zur Prüfung der Fahrzeugseitenteile und der zum Schutz der Insassen vorgesehenen Rückhaltesysteme (beispielsweise Sicherheitsgurte und Seitenairbags) bestimmte Tests vorgeschrieben. Diese Tests sind im Wesentlichen "Crash"-Versuche mit einer Barriere, die ein gegnerisches Kraftfahrzeug darstellt und Gegenstand einer Reihe von Vorschriften sind. Als Bespiele seien hier folgende Vorschriften beziehungsweise Verbraucherschutztests angeführt: FMVSS214, EWG/EG 96/27, ECE-R95, US-LINCAP, EURO-NCAP, JAPAN-NCAP, IIHS Seitencrash.

Bei der Entwicklung von Fahrzeugen werden häufig Ersatzversuche durchgeführt, um den Einfluss bestimmter konstruktiver Änderungen nicht mit einem Crashversuch nachweisen zu müssen.

Eine Vorrichtung für die Ausführung derartiger Ersatzversuche ist aus der US 5,485,758 bekannt. Bei dieser sind auf einem mit Schienen versehenen Untergrund sowohl der Sitzschlitten und der Seitenteilschlitten als auch der Impaktor in Fahrzeugquerrichtung beweglich geführt. Zur Ausführung eines Tests wird der Impaktor zunächst gegen die Kraft einer Feder soweit von dem Prüfling entfernt, dass die Kraft der dabei gespannten Feder der Beschleunigung entspricht, die die zu simulierende Köllisionsgeschwindigkeit ergibt. Weiters müssen für einen aussagefähigen Test die Einflüsse aller bei dem Test weggelassenen Teile berücksichtigt werden. Dazu werden entweder durch einen Versuch mit dem Komplettfahrzeug oder durch Berechnung unter Zuhilfenahme der Methode der finiten Elemente Beschleunigungsverläufe des Sitzschlittens und der Seitenteilschlitten gewonnen. Um auch diese Beschleunigungsverläufe beim Test reproduzieren zu können, müssen in zahlreichen Vorversuchen ("Abstimmungsversuche") energieverzehrende, dämpfende, bremsende oder bei einer definierten Kraft brechende Körper an verschiedenen Stellen angebracht werden, deren Abstimmung häufig nur durch Probieren gelingt. Bei diesen sehr zahlreichen Versuchen werden Seitenteile, Türen, Verkleidungsteile, Sicherheitsgurten, Airbags und Sitzeinheiten zerstört, was diese Vorversuche nicht nur zeitraubend, sondern auch sehr teuer macht.

Es ist somit Aufgabe der Erfindung, eine Prüfvorrichtung zu schaffen, bei der sich diese Vorversuche erübrigen, oder sich zumindest drastisch reduzieren lassen. Erfindungsgemäß zeichnet sich eine Prüfvorrichtung dadurch aus, dass der Impaktor eine Beschleunigungseinrichtung aufweist, die steuerbar sowohl positive als auch negative Beschleunigungen ausführen kann, dass ein Zusatzimpaktor vorgesehen ist, der auf den Sitzschlitten einwirkt, und dass weitere Steuermittel für die Beeinflussung der Bewegung des Sitzschlittens vorgesehen sind.

Da nun positive und negative Beschleunigungen durch Ansteuerung der Beschleunigungseinrichtung direkt, ohne Probieren und Anbringen diverser Körper, darstellbar sind, fällt bereits der Großteil dieser Vorversuche weg. Vorzugsweise enthält die Beschleunigungseinrichtung einen steuerbar mit einem Druckgas beaufschlagten Kolben und eine Bremse, und der Impaktor liegt bei Beginn des Tests bereits am Seitenteil an (Anspruch 2). Auf diese Weise lassen sich auch sehr abrupte Beschleunigungsänderungen in beiden Richtungen erzielen. Dadurch braucht der Impaktor einen geringeren "Anlauf", im günstigsten Fall überhaupt keinen. So braucht die Versuchsanlage auch weniger Bauraum, und somit weniger Hallenraum.

In einer Ausführungsform sind als Steuermittel zur Beeinflussung der Bewegung des Sitzschlittens (nebst der für eine bestimmte Beschleunigung zuzuführende Energie) eine Startfixierung und ein Endanschlag für den Zusatzimpaktor vorgesehen (Anspruch 3). In vielen Fällen genügt diese relativ einfache Anordnung. Vorzugsweise ist die Startfixierung eine Verbindung zwischen dem Sitzschlitten und dem Seitenteilschlitten, die sich bei Bewegung des Seitenteilschlittens löst (Anspruch 4), eine Verbindung mit dem Untergrund ist nicht erforderlich. Insbesondere kann die Verbindung eine Klinke an einem der beiden Schlitten sein, die in ein Halteelement, etwa eine längsgerichtete Ausnehmung, des anderen Schlittens eingreift und bei Annäherung der beiden Schlitten geöffnet wird (Anspruch 5). In besonders einfacher Weise ist die Klinke im Öffnungssinn federbelastet (Anspruch 6). Ebenso kann der Endanschlag für den Zusatzimpaktor auf den Zusatzimpaktor wirken, aber die weitere Bewegung des Sitzschlittens erlauben (Anspruch 7).

In einer besonders vorteilhaften, aber etwas aufwändigeren Ausführungsform ist zur Beeinflussung der Bewegung des Sitzschlittens der Beschleunigungsverlauf der Beschleunigungseinrichtung des Zusatzimpaktors im Bereich positiver und im Bereich negativer Beschleunigungen steuerbar (Anspruch 8). Damit können die Einflüsse aller bei dem Test weggelassenen Teile weitgehend berücksichtigt werden und die Aussagekraft der Testergebnisse ist besonders gross, vor allem, wenn in Weiterführung des Erfindungsgedankens auch die Beschleunigungseinrichtung des Zusatzimpaktors einen steuerbar mit einem Druckgas beaufschlagten Kolben enthält (Anspruch 9). Dann ist auch keine Standfixierung mehr nötig.

Schließlich liegt es noch im Rahmen der Erfindung, dass am Türschlitten, eine Anzahl von einzeln oder zumindest in Gruppen ansteuerbaren Aktuatoren vorgesehen ist (Anspruch 10). Mittels dieser können unterschiedliche Eigenschaften der an einzelnen Montageeinheiten befestigtem Seitenteile (einknickende B-Säule, verschiedenes Intrusionsverhalten von Tür und B-Säule) realistisch dargestellt werden.

Im folgenden wird die Erfindung anhand von Abbildungen beschrieben und erläutert. Es stellen dar:
- Fig. 1: Ein Schema der erfindungsgemäßen Vorrichtung in der Ausgangsstellung,
- Fig. 2: ein Detail zu Fig. 1,
- Fig. 3: wie Fig. 1, zu Beginn des Versuches,
- Fig. 4: wie Fig. 1, in einem Zwischenstadium des Versuches,

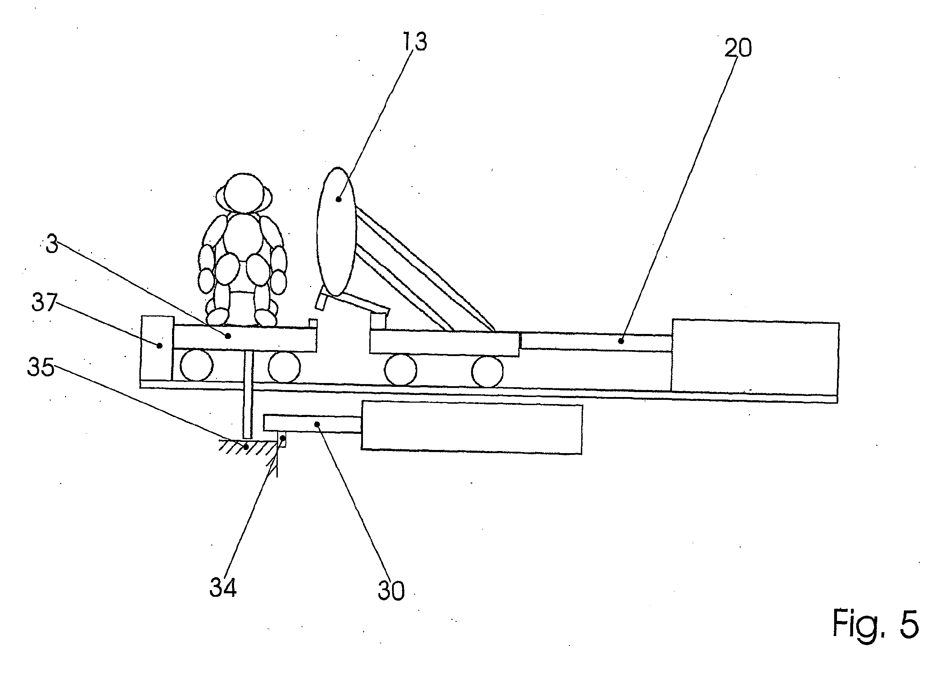

- Fig. 5: wie Fig. 1, am Ende des Versuches,
- Fig. 6: wine weitergebildete erfindungsgemäße Vorrichtung, schematisch.

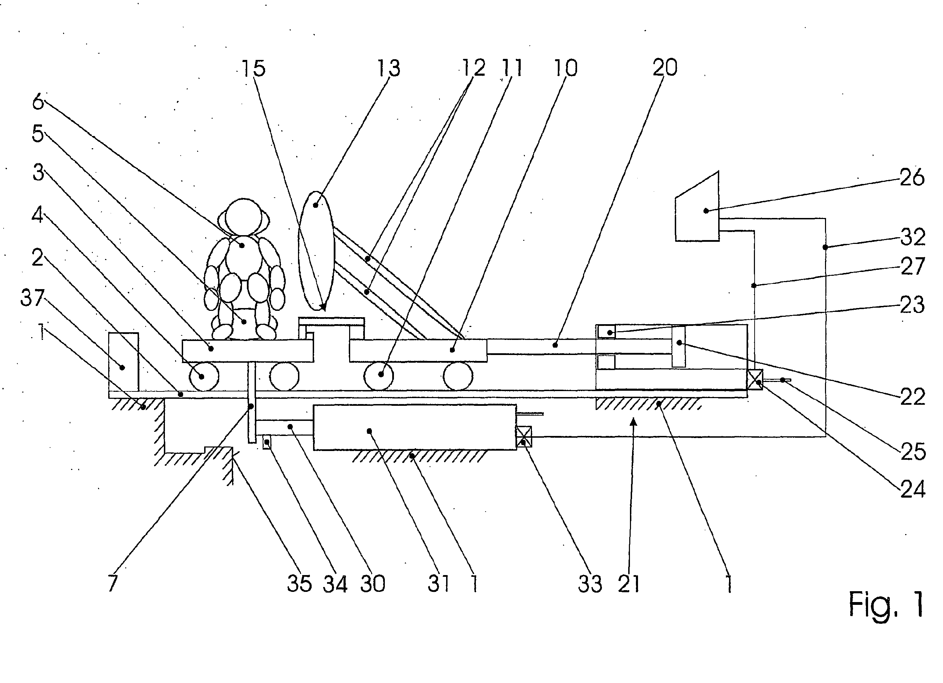

In **Fig. 1** ist die erfindungsgemäße Vorrichtung als ortsfeste Anlage auf einem Untergrund 1 (einem Fundament) befestigt dargestellt. Auf dem Untergrund 1 sind Schienen 2 für die Bewegung eines Sitzschlittens 3 und eines Seitenteilschlittens 10 ortsfest angebracht. Der Sitzschlitten 3 ist mittels Rollen 4 oder Gleitführungen verschiebbar. Auf ihm ist ein Sitz 5 für das zu untersuchende Kraftfahrzeug und gegebenenfalls diverse Sicherheitsvorrichtungen und schließlich eine antropomorphe Versuchspuppe 6, ein sogenannter "Dummy", angebracht. Weiters ist am Sitzschlitten 3 ein weiterer Kraftangriffspunkt vorgesehen, hier symbolisch ein nach unten ragender Ausleger 7.

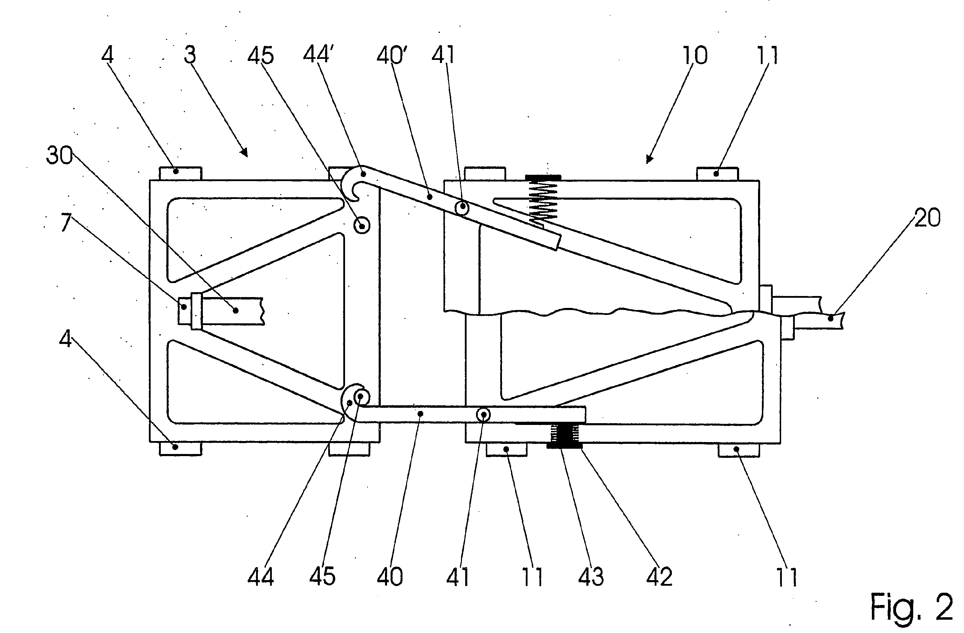

Der Seitenteilschlitten 10 ist ebenfalls mittels Rollen 11 oder Gleitführungen auf den Schienen 2 verschiebbar. Der Seitenteilschlitten 10 trägt eine Aufspannvorrichtung 12 für ein Seitenteil 13 oder eine Tür eines Kraftfahrzeuges. Zwischen dem Seitenteilschlitten 10 und dem Sitzschlitten 3 ist eine Startfixierung 15 vorgesehen, die weiter unten anhand der Fig. 2 beschrieben ist.

An dem Seitenteilschlitten 10 liegt ein Impaktor 20 an. Der Impaktor 20 ist Teil einer Beschleunigungseinrichtung 21, die positive und negative Beschleunigungen in einem vorgegebenen Zeitverlauf steuern kann. Dazu enthält sie einen mit dem Impaktor 20 verbundenen Kolben 22 und eine auf diesen wirkende Bremseinrichtung 23. Im Übrigen ist die Beschleunigungseinrichtung 21 an sich in der DE 199 27 944 beschrieben. Die Steuerung des Impaktors 20 erfolgt mittels über eine Leitung 25 zugeführter Energie über ein Steuerventil 24, das von einer Steuerzentrale 26 über eine Signalleitung 27 angesteuert ist. Die Steuerzentrale 26 führt den Ablauf des Versuches und insbesondere den jeweils festgelegten variablen Verlauf der den Impaktoren erteilten Beschleunigungen.

Ein Zusatzimpaktor 30 als Teil einer ortsfesten Beschleunigungseinrichtung 31 ist zur Einwirkung auf den Ausleger 7 des Sitzschlittens 3 bestimmt und hat einen Bart 34. Die Beschleunigungseinrichtung 31 gleicht mit Vorteil der Beschleunigungseinrichtung 21, sie kann aber auch von einfacherer Bauart ohne die Möglichkeit, auch negative Beschleunigungen einzustellen, sein. Angesteuert wird auch die Beschleunigungseinrichtung 31 von der Steuerzentrale 26 über eine Signalleitung 32, die auf ein Ventil 33 wirkt.

Damit ist eine Wirkungskette aufgebaut, die von dem Impaktor 20 über den Seitenteilschlitten 10 zum Sitzschlitten 3 wirkt und bei einem zweiten Anschlag 37 für den Sitzschlittten 3 endet. Der Zusatzimpaktor 30 mündet am Sitzschlitten 3 in diese Wirkungskette. Der zweite Anschlag 37 kann als Alternative durch eine auf dem Sitzschlitten montierte Bremse ersetzt sein.

In **Fig. 2** ist die Startfixierung 15 schematisch in Draufsicht dargestellt, wobei die im Bild untere Hälfte des Seitenteilschlittens 10 in der Ausgangsposition und dessen obere Hälfte in einer geringfügig vorwärts verschobenen Position dargestellt ist. Am Seitenteilschlitten 10 ist in einem Drehpunkt 41 ein zweiarmiger Hebel 40 gelagert. Einer seiner Arme ist über eine Druckfeder 42 an einem am Schlitten befestigten Widerlager 43 abgestützt. Der andere Arm bildet an seinem Ende einen Haken 44, der ein Halteelement 45, hier einen Zapfen umgreift und so eine Verschiebung des Sitzschlittens 3 verhindert. Wenn der Seitenteilschlitten 10 etwas auf den Sitzschlitten 3 zu bewegt wird, so löst sich durch die Wirkung der Druckfeder 42 der Haken 44' von dem Zapfen 45 und der Sitzschlitten 3 ist freigegeben, er kann sich unter der Wirkung des Zusatzimpaktors 30 unabhängig vom Seitenteilschlitten 10 bewegen. In Wirklichkeit sind die Bewegungen der beiderseitigen Hebel 40 symmetrisch. Außerdem kann die Startfixierung im Rahmen der Erfindung auch abweichend von dem gezeigten Ausführungsbeispiel ausgeführt sein. Sie muss nur sicherstellen, dass die Verbindung zwischen den beiden Schlitten 3,10 gelöst ist, wenn sich der Seitenteilschlitten 10 in Bewegung setzt.

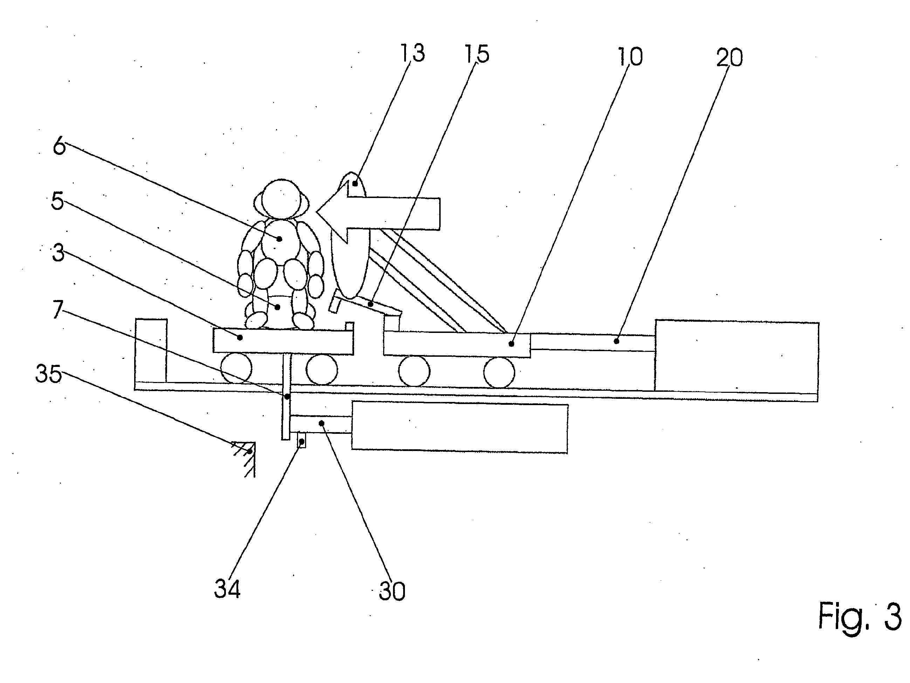

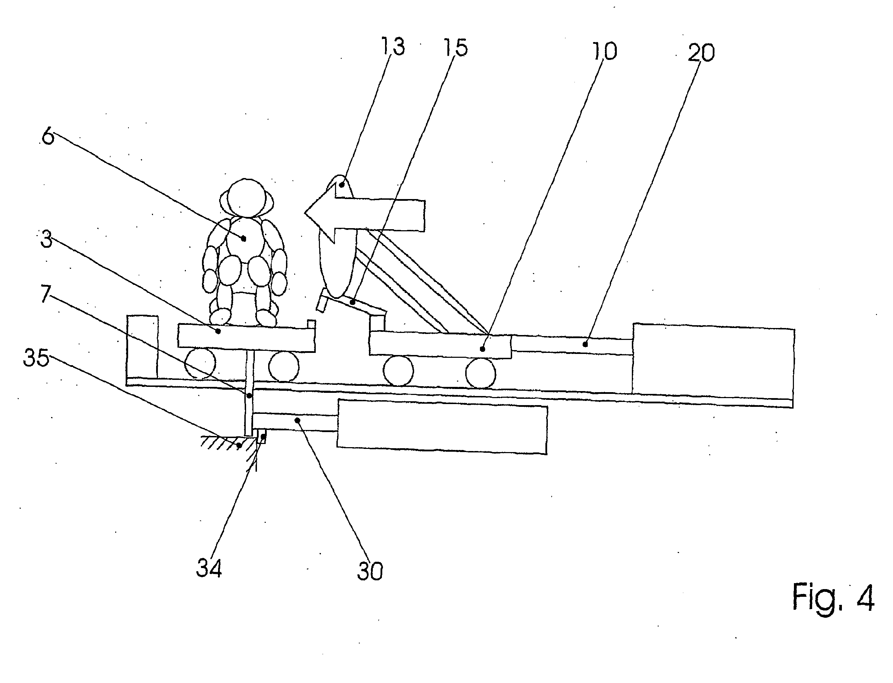

Die Arbeitsweise der beschriebenen Vorrichtung, ausgehend von der Ruheposition der Fig.1 wird im folgenden beschrieben. Durch ein Beginnsignal von der Steuerzentrale 26 wird dem Impaktor 20 ein bestimmter Beschleunigungsverlauf, der positiv und negativ sein kann aufgeprägt. Dieser Beschleunigungsverlauf wurde zuvor ermittelt, in der Regel durch Berechnungen nach der Methode der finiten Elemente, oder aus entsprechenden Messungen in vorhergehenden Crash-Versuchen. Sobald sich der Impaktor 20 und mit ihm der Seitenteilschlitten 10 in Bewegung gesetzt hat, löst sich die Startfixierung 15 und der Seitenteil 13 trifft auf den Sitz 5 und/oder den Dummy 6 auf. Ungefähr gleichzeitig, wobei der genaue Zeitpunkt wieder von der Steuerzentrale 26 vorgegeben wird, wird auch der Zusatzimpaktor 30 in Bewegung gesetzt. Das ist die in **Fig. 3** dargestellte Situation. **Fig. 4** zeigt eine Zwischenstellung die erreicht ist, wenn der Zusatzimpaktor 30 einen bestimmten Weg zurückgelegt hat, der durch einen ortsfesten Anschlag 35 festgelegt ist, an dem der Zusatzimpaktor 30 mit seinem Bart 34 anstoßt. Von diesem Moment an ist der Sitzschlitten 3 vollkommen frei beweglich; das heißt, er bewegt sich entsprechend seiner Massenträgheit, bis er am Anschlag 37 oder durch eine am Sitzschlitten angebrachte Bremse zum Stillstand kommt. Damit ist der Versuch beendet. Nun können diverse weitere Messwerte und der Zustand des Dummy sowie diverser weiterer zu dessen Schutz vorgesehener Vorrichtungen bewertet werden.

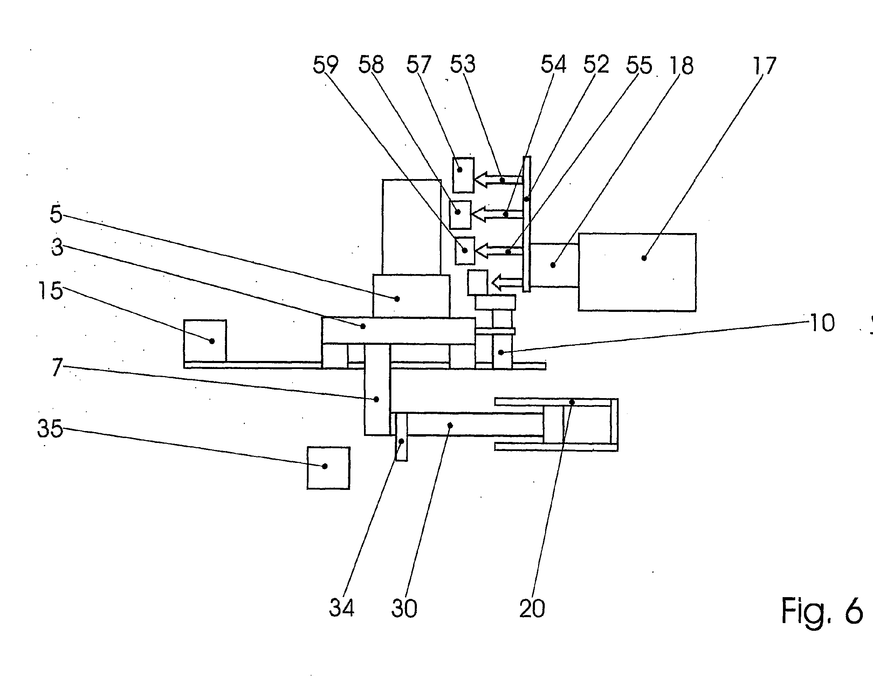

**Fig. 6** schließlich zeigt in einem ganz groben Blockschema eine Weiterbildung der Erfindung. Diese unterscheidet sich von der vorher beschriebenen Ausführungsform dadurch, dass an die Stelle des Seitenteiles 13 am Seitenteilschlitten 10 eine Aufspannvorrichtung 52 und eine Reihe von Aktuatoren 53, 54, 55, sozusagen als Klein-Impaktoren vorgesehen sind, die Montageeinheiten 57,58,59 für Innenverkleidungsteile aufweisen, welche gewisse Bereiche des Körpers schützen sollen. Entsprechend diesen Körperbereichen sind auch die Aktuatoren 53 bis 55 und die Montageeinheiten 57, 58, 59 über die Fläche der Aufspannvorrichtung 52 verteilt.

## Patentansprüche

1. Vorrichtung zur Simulation einer Kollision eines Kraftfahrzeuges mit einem seitlich auftreffenden Impaktor, bestehend aus:
a) einem in Fahrzeugquerrichtung verschiebbaren Sitzschlitten (3), auf dem ein Sitz (5) befestigt ist,
b) einem in Fahrzeugquerrichtung verschiebbaren Seitenteilschlitten (10), auf dem ein Seitenteil (13) eines Kraftfahrzeugaufbaues befestigt ist und
c) dem für die Einwirkung auf das Seitenteil (13) bestimmten Impaktor (20), der eine Beschleunigungseinrichtung (21) umfasst,
wobei der Sitzschlitten (3) und der Seitenteilschlitten (10) voneinander unabhängig verschiebbar sind, **dadurch gekennzeichnet, dass**
d) Der Impaktor (20) eine Beschleunigungseinrichtung (21) aufweist, die steuerbar sowohl positiv als auch negativ beschleunigte Bewegungen ausführen kann,
e) Ein Zusatzimpaktor (30) vorgesehen ist, der auf den Sitzschlitten (3) einwirkt,
f) Weitere Steuermittel (15,37) für die Beeinflussung der Bewegung des Sitzschlittens (3) vorgesehen sind.

2. Vorrichtung nach Anspruch 1, **dadurch gekennzeichnet, dass** die Beschleunigungseinrichtung (21) einen steuerbar mit einem Druckgas beaufschlagten Kolben (22) enthält und Bremseinrichtungen (23), und der Impaktor (20) bei Beginn des Tests bereits am Seitenteil (13) anliegt.

3. Vorrichtung nach Anspruch 1, **dadurch gekennzeichnet, dass** als Steuermittel zur Beeinflussung der Bewegung des Sitzschlittens (3) eine Startfixierung (15) und ein Endanschlag (35) für den Zusatzimpaktor (30) vorgesehen sind.

4. Vorrichtung nach Anspruch 3, **dadurch gekennzeichnet, dass** die Startfixierung (15) eine Verbindung zwischen dem Sitzschlitten (3) und dem Seitenteilschlitten (10) ist, die sich bei Bewegung des Seitenteilschlittens (10) löst.

5. Vorrichtung nach Anspruch 4, **dadurch gekennzeichnet, dass** die Verbindung eine Klinke (40,44) an einem der beiden Schlitten (3;10) ist, die in ein Halteelement (45) des anderen Schlittens (10; 3) eingreift und bei Annäherung der beiden Schlitten (3,10) geöffnet wird.

6. Vorrichtung nach Anspruch 5, **dadurch gekennzeichnet, dass** die Klinke (40,44) im Öffnungssinn federbelastet ist, und bei Annäherung der beiden Schlitten (3,10) freigegeben wird.

7. Vorrichtung nach Anspruch 1, **dadurch gekennzeichnet, dass** der Endanschlag (35) für den Zusatzimpaktor (30) auf den Zusatzimpaktor (30) wirkt, aber die weitere Bewegung des Sitzschlittens (3) erlaubt.

8. Vorrichtung nach Anspruch 1, **dadurch gekennzeichnet, dass** zur Beeinflussung der Bewegung des Sitzschlittens (3) der Beschleunigungsverlauf der Beschleunigungseinrichtung (31) des Zusatzimpaktors (30) im Bereich positiver und im Bereich negativer Beschleunigungen steuerbar ist.

9. Vorrichtung nach Anspruch 1, **dadurch gekennzeichnet, dass** die Beschleunigungseinrichtung (31) des Zusatzimpaktors (30) einen steuerbar mit einem Druckgas beaufschlagten Kolben enthält.

10. Vorrichtung nach Anspruch 1, **dadurch gekennzeichnet, dass** am Seitenteilschlitten (10) eine Anzahl von einzeln ansteuerbaren Aktuatoren (53-55) vorgesehen ist.

## Claims

1. Device for simulating a collision of a motor vehicle with a laterally impacting impactor, composed of:
a) a seat carriage (3) which can be displaced in the transverse direction of the vehicle and on which a seat (5) is mounted,
b) a side component carriage (10) which can be displaced in the transverse direction of the vehicle and on which a side component (13) of a motor vehicle body is mounted, and
c) the impactor (20) which is intended to act on the side component (13) and comprises an acceleration device (21),
the seat carriage (3) and the side component carriage (10) being displaceable independently of one another, **characterized in that**
d) the impactor (20) has an acceleration device (21) which can carry out both positively and negatively accelerated movements in a controllable fashion,
e) an additional impactor (30) which acts on the seat carriage (3) is provided,
f) further control means (15, 37) are provided for influencing the movement of the seat carriage (3).

2. Device according to Claim 1, **characterized in that** the acceleration device (21) contains a piston (22) to which a pressurized gas is applied in a controllable fashion, and brake devices (23), and at the start of the test the impactor (20) already bears against the side component (13).

3. Device according to Claim 1, **characterized in that** a start securing means (15) and an end stop (35) for the additional impactor (30) are provided as control means for influencing the movement of the seat carriage (3).

4. Device according to Claim 3, **characterized in that** the start securing means (15) is a connection between the seat carriage (3) and the side component carriage (10) which is released when the side component carriage (10) moves.

5. Device according to Claim 4, **characterized in that** the connection is a latch (40, 44) on one of the two carriages (3; 10), which latch (40, 44) engages in a securing element (45) in the other carriage (10; 3) and is opened when the two carriages (3, 10) are made to approach.

6. Device according to Claim 5, **characterized in that** the latch (40, 44) is spring-loaded in the opening direction, and it is released when the two carriages (3, 10) are made to approach.

7. Device according to Claim 1, **characterized in that** the end stop (35) for the additional impactor (30) acts on the additional impactor (30) but permits the further movement of the seat carriage (3).

8. Device according to Claim 1, **characterized in that**, in order to influence the movement of the seat carriage (3), the acceleration profile of the acceleration device (31) of the additional impactor (30) can be controlled in the range of positive accelerations and in the range of negative accelerations.

9. Device according to Claim 1, **characterized in that** the acceleration device (31) of the additional impactor (30) contains a piston to which a pressurized gas is applied in a controllable fashion.

10. Device according to Claim 1, **characterized in that** a number of actuators (53-55) which can be actuated individually is provided on the side component carriage (10).

## Revendications

1. Dispositif de simulation d'une collision d'un véhicule automobile à l'aide d'un impacteur percutant le véhicule en côté, composé de :
a) un coulisseau de siège (3) pouvant être coulissé dans la direction transversale du véhicule et sur lequel un siège (5) est fixé ;
b) un coulisseau de partie latérale (10) pouvant être coulissé dans la direction transversale du véhicule et une partie latérale (13) d'une carrosserie de véhicule automobile pouvant être fixée sur lui ; et
c) l'impacteur (20) définissant l'effet sur la partie latérale (13) et comprenant un dispositif d'accélération (21) ;
le coulisseau de siège (3) et le coulisseau de partie latérale (10) pouvant être coulissés indépendamment l'un de l'autre ;
**caractérisé en ce que** :
d) l'impacteur (20) comporte un dispositif d'accélération (21) pouvant réaliser de façon commandée tant des mouvements d'accélération positive que négative ;
e) un impacteur supplémentaire (30) est prévu qui agit sur le coulisseau de siège (3) ;
f) d'autres moyens de commande (15, 37) sont prévus pour influer sur le mouvement du coulisseau de siège (3).

2. Dispositif selon la revendication 1, **caractérisé en ce que** le dispositif d'accélération (21) contient un piston (22) chargé au moyen d'un gaz sous pression pour le pilotage ainsi que des dispositifs de freinage (23) et que l'impacteur (20) repose, au début de l'essai déjà, au niveau de la partie latérale (13).

3. Dispositif selon la revendication 1, **caractérisé en ce que** les moyens de commande prévus pour influer sur le mouvement du coulisseau de siège (3) sont une fixation de début (15) et une butée de fin (35) pour l'impacteur supplémentaire (30).

4. Dispositif selon la revendication 3, **caractérisé en ce que** la fixation de début (15) est une jonction prévue entre le coulisseau de siège (3) et le coulisseau de partie latérale (10) qui se défait en présence d'un mouvement du coulisseau de partie latérale (10).

5. Dispositif selon la revendication 4, **caractérisé en ce que** la jonction est une clenche (40, 44) placée au niveau d'un des deux coulisseaux (3 ; 10) qui s'engrène dans un élément d'arrêt (45) de l'autre coulisseau (10 ; 3) et s'ouvre lorsque les deux coulisseaux (3, 10) sont rapprochés.

6. Dispositif selon la revendication 5, **caractérisé en ce que** la clenche (40, 44) est chargée par ressort dans le sens de l'ouverture et libérée lorsque les deux coulisseaux (3, 10) sont rapprochés.

7. Dispositif selon la revendication 1, **caractérisé en ce que** la butée de fin (35) prévue pour l'impacteur supplémentaire (30) agit sur l'impacteur supplémentaire (30) tout en permettant une poursuite du mouvement du coulisseau de siège (3).

8. Dispositif selon la revendication 1, **caractérisé en ce que** la courbe d'accélération du dispositif d'accélération (31) de l'impacteur supplémentaire (30) peut être commandée dans la zone des accélérations positives et dans la zone des accélérations négatives pour exercer une influence sur le mouvement du coulisseau de siège (3).

9. Dispositif selon la revendication 1, **caractérisé en ce que** le dispositif d'accélération (31) de l'impacteur supplémentaire (30) contient un piston chargé au moyen d'un gaz sous pression pour le pilotage.

10. Dispositif selon la revendication 1, **caractérisé en ce qu'**un certain nombre d'actionneurs (53 à 55) pilotables de façon individuelle sont prévus au niveau du coulisseau de partie latérale (10).
